# EUROPEAN PATENT APPLICATION

(11) **EP 2 461 226 A1**
(43) Date of publication of application: **06.06.2012**
(21) Application number: 11190590.7
(22) Date of filing: 24.11.2011
(51) Int. Cl.: G05G 1/30, G05G 1/38, B60K 26/00, G05G 1/00, G05G 1/40, G05G 1/405, G05G 1/44, G05G 1/445

(54) **Adjustable pedal**

(30) Priority: 03.12.2010 GB 201020505
(71) Applicant: Valtra Oy Ab, 44201 Suolahti (FI)
(72) Inventor: Himanen, Henry, 40740 Jyvaskyla (FI)
(74) Representative: Marden, David Ian

(57) **Abstract**

An adjustable pedal (20) comprises a rotatable plate (24) for securing to the floor (22) of a vehicle cab, and a pedal module (26) comprising a pedal pad (30) which is pivotally mounted to a base element (32) which is rotatably mounted to the plate. The position of the pedal module can be adjusted by rotation of the plate relative to the pedal module and the floor.

## Description

### FIELD OF THE INVENTION

The invention relates to adjustable pedals for application in utility vehicles such as agricultural tractors and the like.

### BACKGROUND

Due to the different build of humans, it is well known to provide adjustable components associated with a driver's station. For example, in an automobile it is well known to provide a driver's seat which is adjustable with several degrees of freedom. The same can be applied to the steering wheel in some cases.

Pedals forming part of the driver's station can also be adjustable.

### SUMMARY OF INVENTION

It is an object of the invention to provide an adjustable pedal having a simple construction which can be applied to utility vehicles.

In accordance with the invention there is provided an adjustable pedal comprising a rotatable plate for securing to the floor of a vehicle cab, and a pedal module comprising a pedal pad pivotally mounted to a base element which is rotatably mounted to the plate, wherein the position of the pedal module can be adjusted by rotation of the plate relative to the pedal module and the floor. The invention exploits the relatively flat floors of utility vehicles whereupon the rotatable plate can be mounted without causing significant obstruction. In essence, the inventive adjustable pedal can be delivered with the addition of a single component namely the rotatable plate. Therefore the invention can be implemented relatively easily and cheaply without significant redesign of the components.

in a preferred embodiment the plate comprises an upstanding peg spaced from the plate's axis of rotation relative to the floor, the peg being disposed for rotational movements in a vertical ball provided by the pedal module. Advantageously, this provides a simple mechanism in which the plate effectively acts as a cam and translates the pedal module during adjustment without causing rotation of the pedal pad relative to the driver.

Preferably, the freedom of rotation of the plate relative to the floor is restricted by a stop device or otherwise to a range of less than 360 degrees. In the case of any cables passing through the plate, such a restriction of rotation avoids excessive twisting of the cables.

The pedal assembly may be provided with releasable locking means which locks the position of the pedal module relative to the plate, and/or locks the position of the plate relative to the floor.

### BRIEF DESCRIPTION OF THE DRAWINGS

Further advantages of the invention will become apparent from reading the following description of a specific embodiment with reference to the appended drawings in which:-

Figure 1 is a perspective view of the internal layout of a tractor cab which includes a pedal in accordance with the invention;

Figure 2 is a perspective view of the cab of Figure 1 showing the pedal in a different position;

Figure 3 is a perspective view of the cab of Figure 1 viewed from a different direction;

Figure 4 is an exploded perspective view of the adjustable pedal shown in Figure 1;

Figure 5 is an exploded perspective view of the pedal of Figure 4 seen from underneath;

Figure 6 is a perspective view of the pedal of Figure 5 shown with the base cover included; and,

Figure 7 is a side view of the pedal of Figure 1.

### DESCRIPTION OF EXAMPLE EMBODIMENT

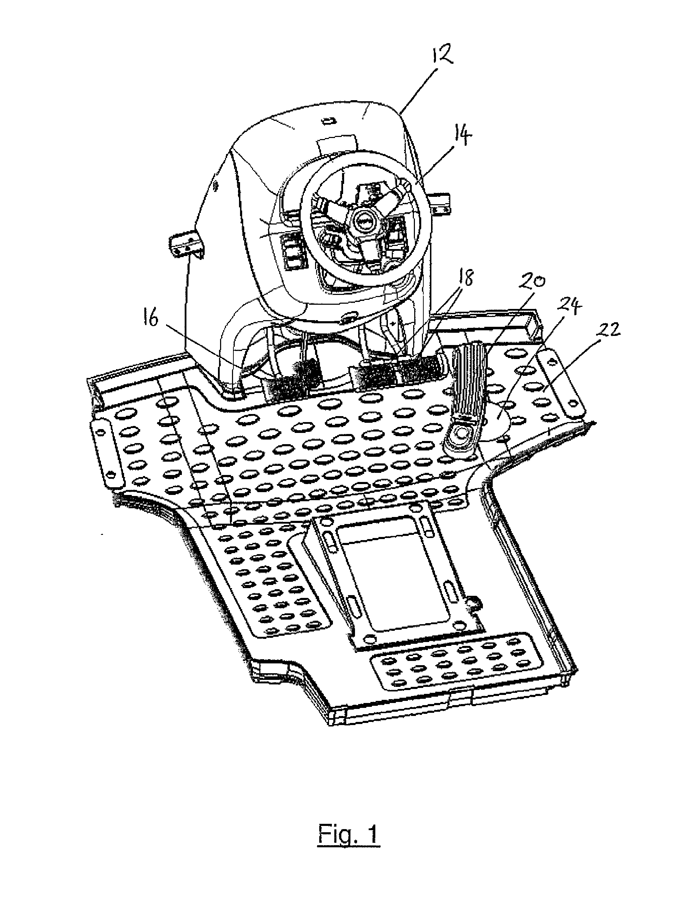

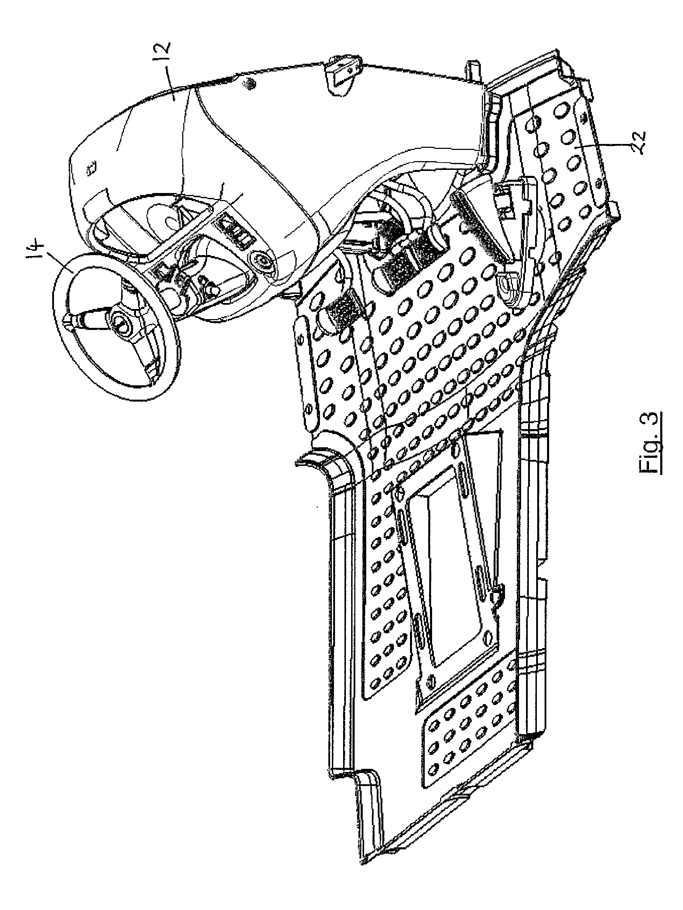

With reference to Figures 1, 2 and 3, an agricultural tractor cab is shown with the driver's seat removed for sake of clarity. A steering console 12 includes a steering wheel 14, a clutch pedal 16 and left and right brake pedals 18. An adjustable gas (or throttle) pedal 20 is mounted to the floor 22 of the cab.

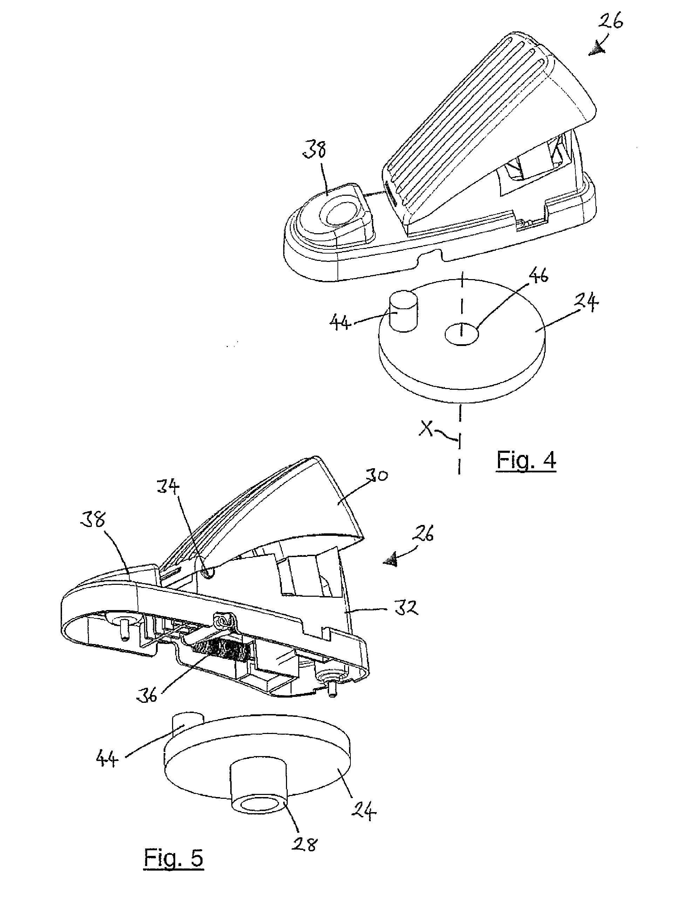

With reference to Figures 4, 5, 6 and 7, the gas pedal 20 comprises a rotatable plate 24 and a pedal module 26. The plate 24 is circular and is rotatably mounted to the floor 22 so as to permit rotation around vertical axis X shown in Figure 4. The means by which the plate 24 is mounted to the floor 22 in this case includes a collar 28 protruding from the underside of plate 24 which is received in a hole (not shown) in the floor 22. Alternative methods of attaching the plate 24 to the floor 22 will of course be envisaged by the skilled person.

Turning to the pedal module 26, a pedal pad 30 formed of molded plastic or the like is pivotally mounted to a base element 32 by means of a pivoting joint 34 of known construction. The mechanism by which pedal pad 30 is depressed and restored is of known construction and will not be described in detail. Biasing means in the form of a spring 36 is provided to force the pedal pad 30 upwardly so as to act against downward force of the driver's foot.

A footrest 38 is also provided in a known manner to improve the ergonomic construction of the overall pedal.

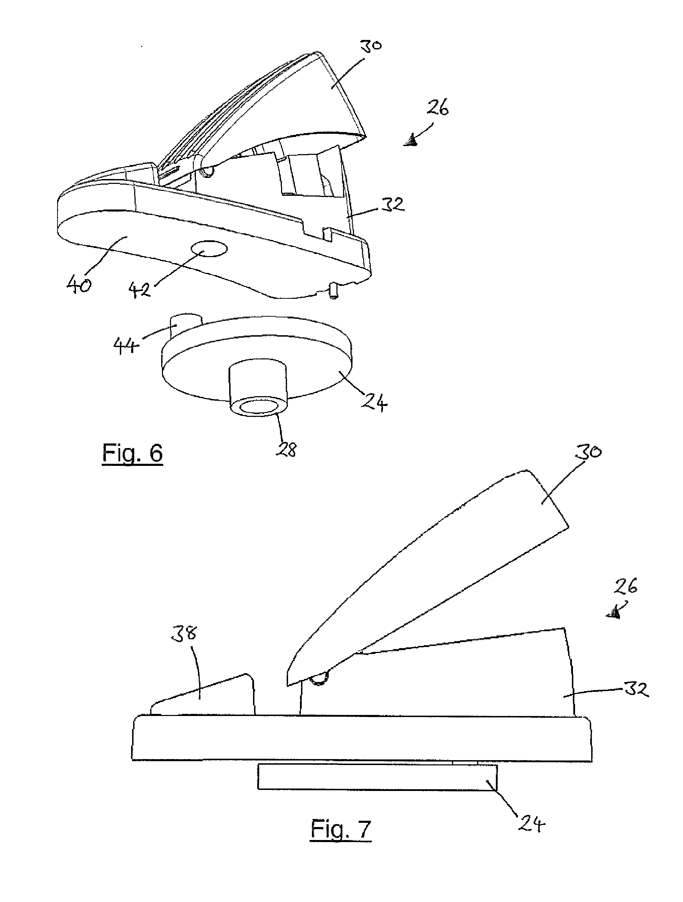

The spring 36 and associated mechanism is enclosed within the base element 32 by a cover 40 shown in Figure 6. A hole 42 provided in the cover element 40 receives an upstanding peg 44 provided on the upward facing surface of plate 24. A detent (not shown) may be provided around the circumference of the peg 44 to provide a latching mechanism which ensures the pedal module remains attached to the plate 24 during normal use.

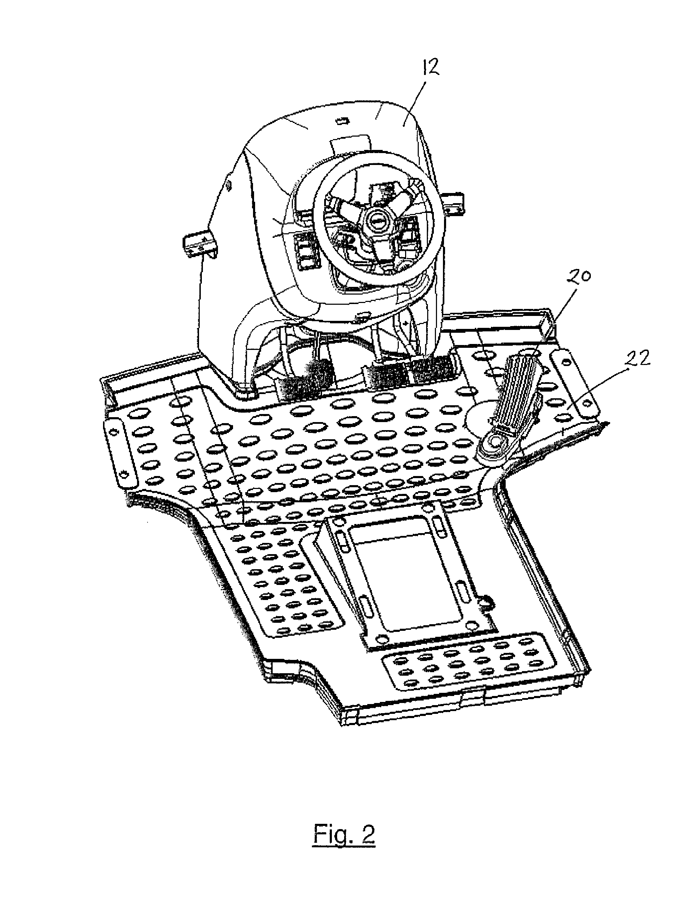

The pedal module 26 is free to rotate relative to the plate 24 around a vertical axis defined by the peg 44. Adjustment of the gas pedal 20 from a first position (Fig 1) to a second position (Fig 2) can be executed by a simple rotation of plate 24 whilst keeping the orientation of pedal pad (30) relative to the driver constant.

A stop (not shown) may be provided to limit the range of rotation by which the plate can rotate.

A sensor (not shown) is provided in the pedal module to sense the extent of depression of pedal pad 30. The sensor is in communication with an electronic control unit (also not shown) by means of a wireless connection or a wired link (not shown) which passes from the pedal module 26 through the hole 46 provided in the centre of plate 24.

Although shown as an adjustable gas pedal, it is envisaged that the adjustable mechanism in accordance with the invention may be applied to other pedals in other applications without deviating from the scope of the invention. For example, other agricultural vehicles may include a pedal of the construction described or indeed any vehicle with a flat floor and enough space to accommodate such.

## Claims

1. An adjustable pedal (20) comprising a rotatable plate (24) for securing to the floor (22) of a vehicle cab, and a pedal module (26) comprising a pedal pad (30) pivotally mounted to a base element (32) which is rotatably mounted to the plate, wherein the position of the pedal module can be adjusted by rotation of the plate relative to the pedal module and the floor.

2. An adjustable pedal according to Claim 1, wherein the plate comprises an upstanding peg (44) spaced from the plate's axis of rotation relative to the floor, the peg being disposed for rotation movement in a vertical bore (42) provided by the pedal module.

3. An adjustable pedal according to Claim 1 or 2 secured to the floor of a vehicle, wherein freedom of rotation of the plate relative to the floor is limited by a stop to a range of less than 360 degrees.

4. An adjustable pedal according to any preceding claim secured to the floor (22) of a vehicle, comprising a sensor for sensing the extent of depression of the pedal pad, the sensor being in communication with a control unit located remote from the pedal.

5. An adjustable pedal according to Claim 4, wherein the sensor communicates with the control unit via a cable which passes through the plate.

6. An adjustable pedal according to any preceding claim, comprising releasable locking means which locks the position of the pedal module relative to the plate, and/or locks the position of the plate relative to the floor.
